# EUROPEAN PATENT SPECIFICATION

(11) **EP 3 056 254 B1**
(45) Date of publication and mention of the grant of the patent: **19.09.2018**
(21) Application number: 15154410.3
(22) Date of filing: 10.02.2015
(51) Int. Cl.: B01D 45/06, B01D 45/08

(54) **FILTER ASSEMBLY FOR A FLUID FILTER**
FILTERANORDNUNG FÜR EINEN FLÜSSIGKEITSFILTER
ENSEMBLE FILTRANT POUR UN FILTRE À FLUIDE

(43) Date of publication of application: 17.08.2016
(73) Proprietor: Chen, Po-Hui, Fenyuan Township, Changhua County 50245 (TW)
(72) Inventor: Chen, Po-Hui, Fenyuan Township, Changhua County 50245 (TW)
(74) Representative: Lang, Christian

(56) References cited:
- GB-A- 2 456 899
- US-A- 1 606 749
- US-A- 3 633 757
- US-A- 4 105 562

## Description

### BACKGROUND OF THE INVENTION

### Field of the Invention

The present invention relates to a filter, and more particularly to filter assembly for a fluid filter.

### Description of the Prior Art

Fluid filters are used to remove micro particles, oil or moisture from the gas, or remove impurities from liquid.

Among the fluid filters, an air compressor moisture removal device is provided with a separating layer assembly which includes a plurality of layers removably superimposed one on top of another. Each of the layers is provided with a concave at one end, a protruding portion at another end, and a hole penetrating through the two ends, so that the layers are superimposed in such a manner that the protrusion of one layer is engaged in the concave of another layer, and the number of the layers can be adjusted as desired.

However, the layers have to be assembled together by a screw inserted through the holes of the layers and then fixed to a gas guide member. The assembling of the layers requires the use of the screw, and the length of the screw has to change according to the number of the layers, which makes the assembly troublesome. Such a filter is disclosed in GB 2 456 899 A. Moreover, this document discloses filters in which the fluid has to pass all filter layers and each filter layer is made of one single interlayer structure. A similar filter is disclosed in US 1 606 749 A.

The present invention has arisen to mitigate and/or obviate the afore-described disadvantages.

### SUMMARY OF THE INVENTION

The primary objective of the present invention is to provide a filter assembly for a fluid filter which is capable of reducing assembling cost.

Another objective of the present invention is to provide a filter assembly for a fluid filter which is capable of reducing manufacturing cost.

To achieve the above objectives, a filter assembly for a fluid filter is defined in claim 1. Advantageous embodiments are subject matter of the dependent claims. A filter assembly for a fluid filter in accordance with the present invention comprises: a plurality of filter units assembled
in series, and each of the filter units comprises: a connecting member including a connecting disc, a connecting pipe which protrudes from a top surface of the connecting disc and is provided with a guiding passage penetrating through the connecting disc, and an connecting ring which protrudes from a bottom surface of the connecting disc; an input member including an input plate, an input ring which protrudes from a top surface of the input plate and fixed to the connecting ring, an extending pipe which penetrates through the input plate and is provided for insertion of a connecting pipe of another filter unit, a plurality of input pipes which protrude from a bottom surface of the input plate and are each provided with an input passage penetrating through the input plate, and a separating portion which is disposed in each of the input pipes to divide the input passage into an upper input chamber and a lower input chamber, each of the separating portions including an input hole in communication with the upper and lower input chambers; and an output member being fixed on the top surface of the input plate, and including an inserting hole for insertion of the extending pipe, and a plurality of output protrusions to seal the upper input chambers, and each of the output protrusions including an output hole in communication with a corresponding one of the upper input chambers.

Preferably, the input ring is fixed on an inner surface of the connecting ring.

Preferably, the extending pipe includes an extending section which protrudes from the top surface of the input plate and is inserted in the inserting hole of the output member.

Preferably, the output member further comprises an output ring which is fixed on an inner surface of the input ring of the input member, and an airtightness is maintained between an end surface of the output ring and the bottom surface of the connecting disc.

Preferably, each of the output holes of the output member and a corresponding one of the input holes of the input member are staggered at 180 degrees to each other.

Preferably, the connecting pipe of the connecting member of a first one of the filter units is disposed in an output pipe of a filter cover.

Preferably, the extending pipe of the input member of a last one of the filter units is sealed with a plug.

Preferably, the plug includes a plug portion which is inserted in the extending pipe to produce a sealing effect, a cover portion which covers the input pipes of the input member, and a recess formed in the cover portion.

Preferably, an inner pipe is sleeved onto the connecting ring of the connecting member of a first one of the filter units.

Preferably, a connecting disc of a connecting member of the first one of the filter units has a diameter larger than an outer diameter of the inner pipe.

### BRIEF DESCRIPTION OF THE DRAWINGS

Fig. 1 is an exploded view of a filter assembly for a fluid filter in accordance with the present invention;
Fig. 2 is a cross sectional view of the filter assembly for a fluid filter in accordance with the present invention;
Fig. 3 is another cross sectional view of the filter assembly for a fluid filter in accordance with the present invention;
Fig. 4 is an enlarged view of a part of Fig. 3;
Fig. 5 is an assembly cross sectional view of the filter assembly for a fluid filter in accordance with the present invention;
Fig. 6 is an exploded view of the filter assembly for a fluid filter in accordance with the present invention; and
Fig. 7 is a top view of the filter assembly for a fluid filter in accordance with the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

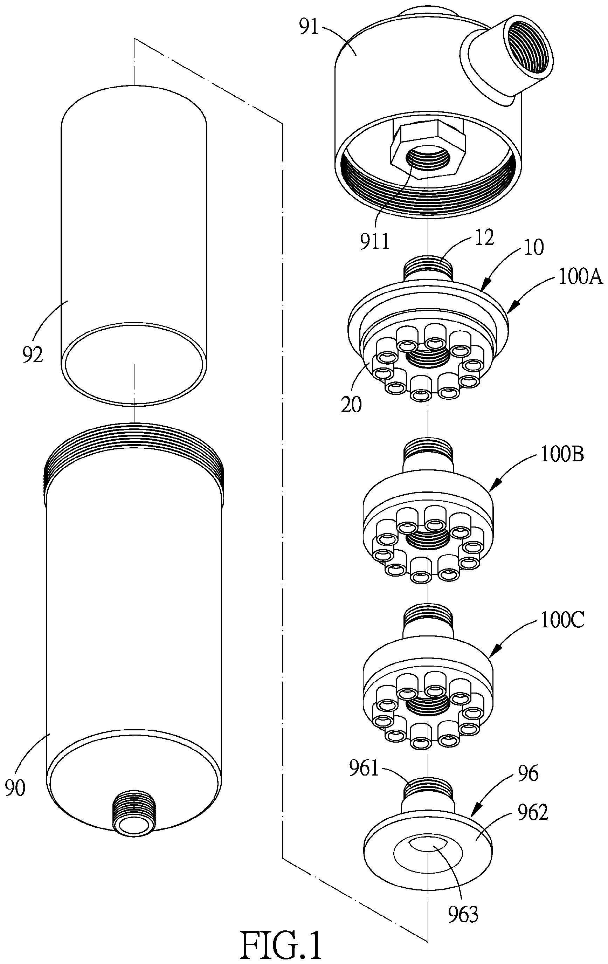

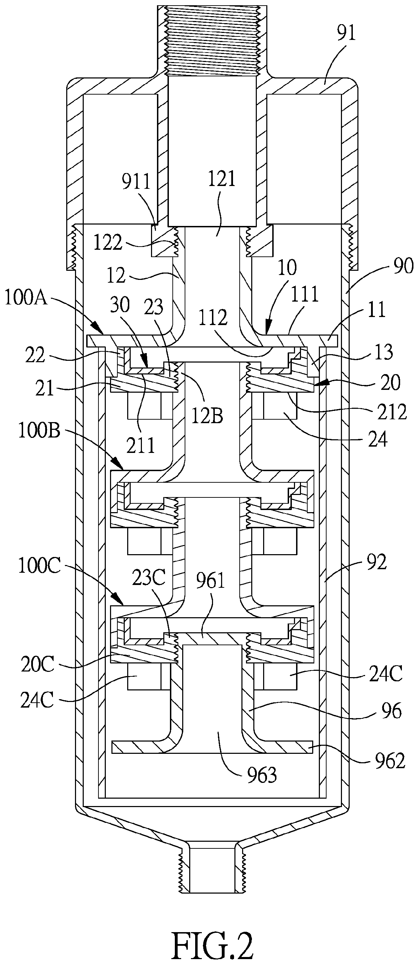

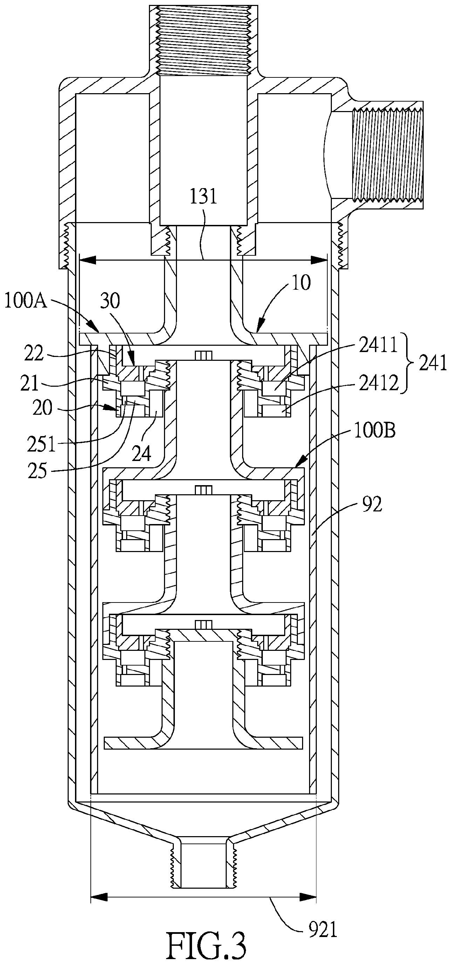

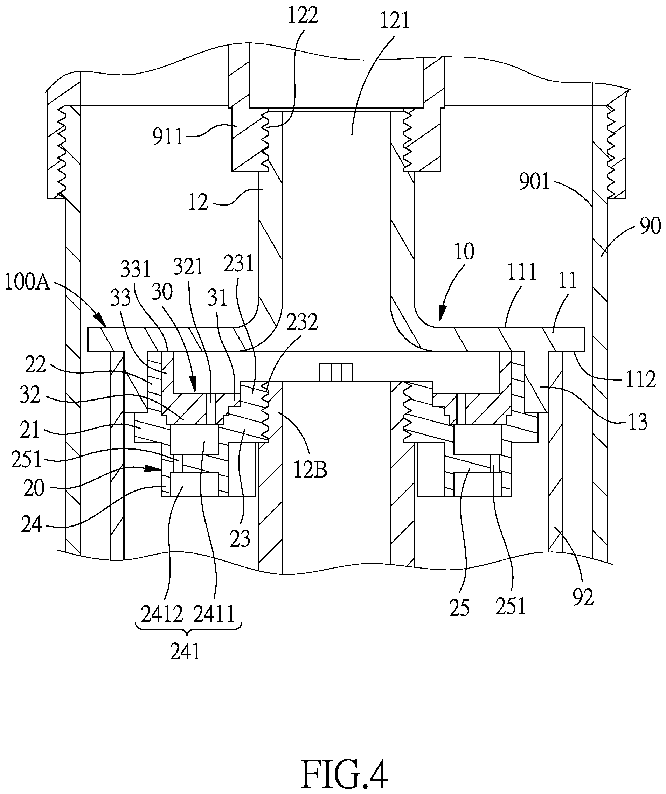

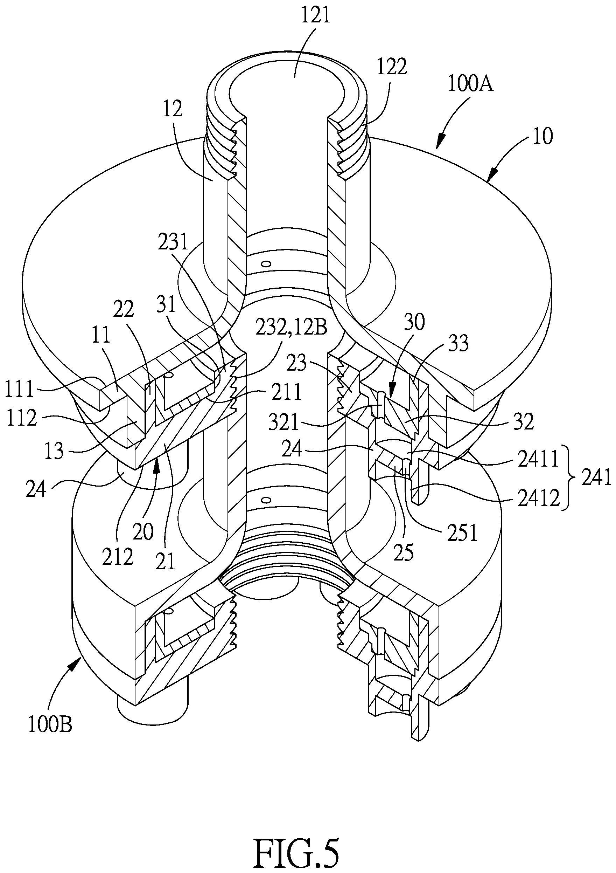

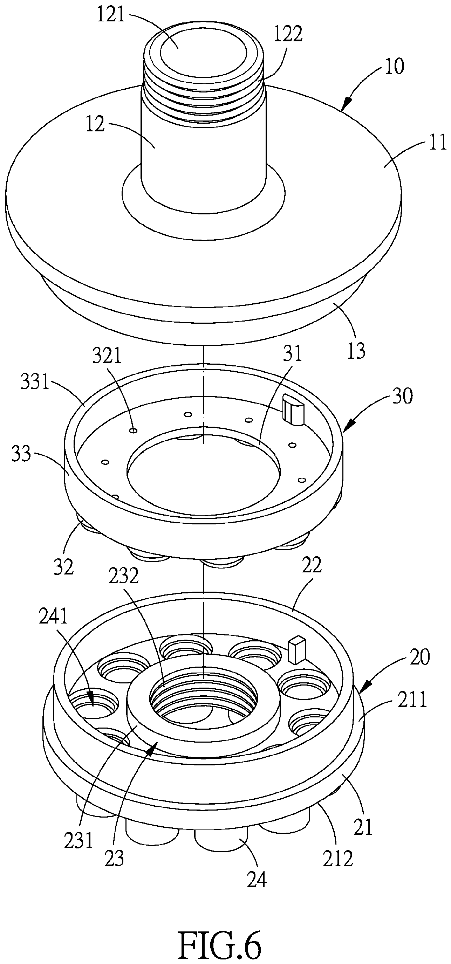

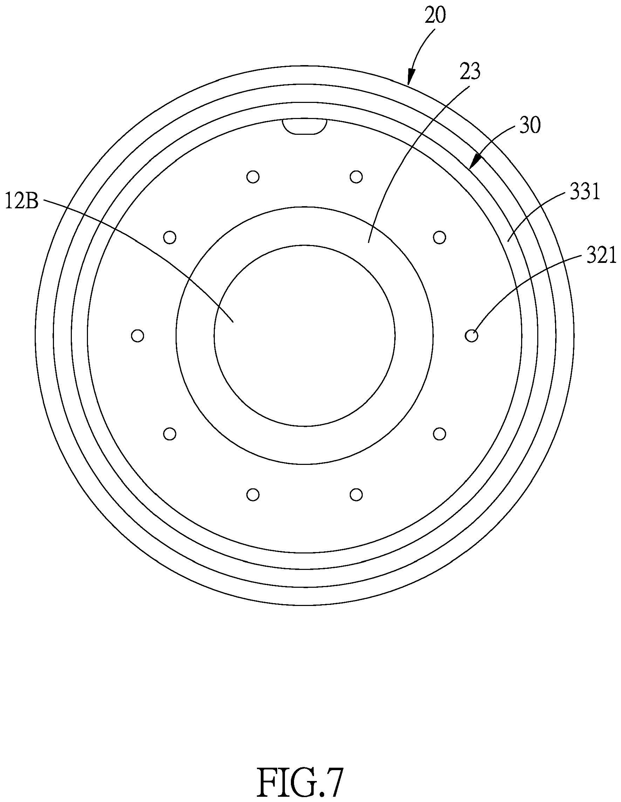

Referring to Figs. 1-7, a filter assembly for a fluid filter in accordance with the present invention is disposed in a space defined by a filter cylinder 90 and a filter cover 91 and comprises three filter units which are identical structures assembled in series. The three filter units are a first filter unit 100A, a second filter unit 100B, and a third filter unit 100C. For easy explanation, only the first filter unit 100A is described as an example. The first filter unit 100A comprises: a connecting member 10, an input member 20 and an output member 30.

The connecting member 10 includes a connecting disc 11, a connecting pipe 12 which protrudes from a top surface 111 of the connecting disc 11 and is provided with a guiding passage 121 penetrating through the connecting disc 11, and an connecting ring 13 which protrudes from a bottom surface 112 of the connecting disc 11. In this embodiment, the connecting pipe 12 includes an outer thread 122.

The input member 20 includes an input plate 21, an input ring 22 which protrudes from a top surface 211 of the input plate 21 and fixed to the connecting ring 13, an extending pipe 23 which penetrates through the input plate 21 and is provided for insertion of a connecting pipe 12B of another filter unit (the second filter unit 100B for example), a plurality of input pipes 24 which protrude from a bottom surface 212 of the input plate 21 and are each provided with an input passage 241 penetrating through the input plate 21, and a separating portion 25 which is disposed in the input pipe 24 to divide the input passage 241 into an upper input chamber 2411 and a lower input chamber 2412. Each of the separating portions 25 includes an input hole 251 via which the upper and lower input chambers 2411, 2412 are in communication with each other. In this embodiment, the input ring 22 of the input member 20 is fixed on an inner surface of the connecting ring 13, and the extending pipe 23 includes an extending section 231 which protrudes from the top surface 211 of the input member 20, and also includes an inner thread 232.

The output plate 30 is fixed on the top surface 211 of the input plate 21, and comprises: an inserting hole 31 for insertion of the extending section 231 of the extending pipe 23, and a plurality of output protrusions 32 to seal the upper input chambers 2411. Each of the output protrusions 32 includes an output hole 321 in communication with the upper input chamber 2411. In this embodiment, the output plate 30 further comprises an output ring 33 which is fixed on an inner surface of the input ring 22 of the input member 20, and an airtightness is maintained between an end surface 331 of the output ring 33 and the bottom surface 112 of the connecting disc 11. Besides, each of the output holes 321 of the output plate 30 and a corresponding one of the input holes 251 of the input plate 21 are staggered at 180 degrees to each other.

It is to be noted that, in this embodiment, each of the filter units is disposed in the filter cylinder 90 and the filter cover 91. The connecting pipe 12 of the connecting member 10 of the first one (namely, the first filter unit 100A) of the filter units is disposed in the output pipe 911 of the filter cover 91, and an inner pipe 92 is sleeved onto the connecting ring 13 of the connecting member 10 of the first filter unit 100A. The connecting disc 11 of the connecting member 10 of the first filter unit 100A has a diameter 131 larger than an outer diameter 921 of the inner pipe 92 to improve filtering effect. There is an interval between the connecting disc 11 of the connecting member 10 and an inner surface 901 of the filter cylinder 90, and the smaller the interval, the better the filter effect. The extending pipe 23C of the input member 20C of the last one (namely the third filter unit 100C) of the filter units is sealed with a plug 96 which includes: a plug portion 961 which is inserted in the extending pipe 23C to produce a sealing effect, a cover portion 962 which covers the input pipes 24C of the input member 20C, and a recess 963 formed in the cover portion 962, so as to improve filter effect.

What mentioned above are the structural relations of the main components of the embodiment of the present invention, and the filter assembly for a fluid filter in accordance with the present invention processes the following advantages:
First of all, low assembling cost. Since the input member 20 of the respective filter units is provided with the extending pipe 23 which is used to connect the connecting pipe 12B of the connecting member 10B of another filter unit, via engagement of inner and outer threads for example in this embodiment. Therefore, the filter units can be easily assembled by directly screwing the connecting pipe 12B of the connecting member 10B of one filter unit into the extending pipe 23 of the input member 20 of another filter unit 100A, without using tools or fasteners. Hence, the assembling cost is relatively reduced.

On the other hand, low manufacturing cost. Since each of the filter units of the present invention consists of the connecting member 10, the input member 20 and the output plate 30, the manufacturing of the filter assembly of the present invention can be done with a single module, and the number of the filter units can be adjusted as desired, which reduces the manufacturing cost.

Finally, convenience of assembly: since the extending pipe 23 of the input member 20 includes the extending section 231 which protrudes from the top surface 211 of the input member 20, with the extending section 231, the extending pipe 23 of the input member 20 can be quickly guided into the inserting hole 31 of the output plate 30, so that the input and output plates 20, 30 can be assembled together conveniently.

While we have shown and described various embodiments in accordance with the present invention, it is clear to those skilled in the art that further embodiments may be made without departing from the scope of the present invention.

## Claims

1. A filter assembly for a fluid filter comprising:
a plurality of filter units assembled in series, and each of the filter units comprising:
a connecting member 10 including a connecting disc 11, a connecting pipe 12 which protrudes from a top surface 111 of the connecting disc 11 and is provided with a guiding passage 121 penetrating through the connecting disc 11, and an connecting ring 13 which protrudes from a bottom surface 112 of the connecting disc wherein the filter unit further comprises
an input member 20 including an input plate 21, an input ring 22 which protrudes from a top surface of the input plate 21 and fixed to the connecting ring 13, an extending pipe 23 which penetrates through the input plate 21 and is provided for insertion of a connecting pipe 12 of another filter unit in order to connect the extending pipe 23 and the connecting pipe 12 of the connecting member 10 of another filter unit, a plurality of input pipes 24 which protrude from a bottom surface 212 of the input plate 21 and are each provided with an input passage 241 penetrating through the input plate 21, and a separating portion 25 which is disposed in each of the input pipes 24 to divide the input passage 241 into an upper input chamber 2411 and a lower input chamber 2412, each of the separating portions 25 including an input hole 251 in communication with the upper and lower input chambers 2411, 2412; and
an output member 30 being fixed on the top surface of the input plate 21, and including an inserting hole 31 for insertion of the extending pipe 23, and a plurality of output protrusions 32 to seal the upper input chambers 2411, and each of the output protrusions 32 including an output hole in communication with a corresponding one of the upper input chambers 2411.

2. The filter assembly as claimed in claim 1, wherein the input ring 22 is fixed on an inner surface of the connecting ring 13.

3. The filter assembly as claimed in claim 1, wherein the extending pipe 23 includes an extending section 231 which protrudes from the top surface 211 of the input plate 21 and is inserted in the inserting hole 31 of the output member 30.

4. The filter assembly as claimed in claim 1, wherein the output member 30 further comprises an output ring 33 which is fixed on an inner surface of the input ring 22 of the input member 20, and an airtightness is maintained between an end surface 331 of the output ring 33 and the bottom surface 112 of the connecting disc 11.

5. The filter assembly as claimed in claim 1, wherein each of the output holes 321 of the output member 30 and a corresponding one of the input holes 251 of the input member 20 are staggered at 180 degrees to each other.

6. The filter assembly as claimed in claim 1, wherein the connecting pipe 12 of the connecting member 10 of a first one of the filter units is disposed in an output pipe 911 of a filter cover.

7. The filter assembly as claimed in claim 1, wherein the extending pipe 23c of the input member 20 of a last one of the filter units is sealed with a plug 96.

8. The filter assembly as claimed in claim 7, wherein the plug 96 includes a plug portion 961 which is inserted in the extending pipe 23c to produce a sealing effect, a cover portion 962 which covers the input pipes 24c of the input member 20c, and a recess 963 formed in the cover portion 962.

9. The filter assembly as claimed in claim 1, wherein an inner pipe 92 is sleeved onto the connecting ring 13 of the connecting member 10 of a first one 100A of the filter units.

10. The filter assembly as claimed in claim 9, wherein a connecting disc 11 of a connecting member 10 of the first one 110A of the filter units has a diameter 113 larger than an outer diameter 921 of the inner pipe 92.

## Patentansprüche

1. Filteranordnung für einen Flüssigkeitsfilter, umfassend:
eine Mehrheit an Filtereinheiten, die in Serie angeordnet sind, und jede der Filtereinheiten umfasst:
ein Verbindungselement 10, das eine Verbindungsscheibe 11, ein Verbindungsrohr 12, das aus einer oberen Oberfläche 111 der Verbindungsscheibe 11 hervorsteht und mit einem Führungskanal 121 ausgestattet ist, der durch die Verbindungsscheibe 11 dringt, und einen Verbindungsring 13 beinhaltet, der von einer unteren Oberfläche 112 der Verbindungsscheibe hervorsteht,
wobei
die Filtereinheit im Weiteren umfasst
ein Eingangselement 20, das eine Eingangsplatte 21, einen Eingangsring 22, der von einer oberen Oberfläche der Eingangsplatte 21 hervorsteht und an dem Verbindungsring 13 befestigt ist, ein Verlängerungsrohr 23, das durch die Eingangsplatte 21 dringt und zum Einstecken eines Verbindungsrohrs 12 einer anderen Filtereinheit vorgesehen ist, um das Verlängerungsrohr 23 und das Verbindungsrohr 12 des Verbindungselements 10 einer anderen Filtereinheit zu verbinden, eine Vielzahl an Eingangsrohren 24, die von einer unteren Oberfläche 212 der Eingangsplatte 21 hervorstehen und jeweils mit einer Eingangspassage 241 ausgestattet sind, die durch die Eingangsplatte 21 dringt, und einen separierenden Teil 25 beinhaltet, der in jedem der Eingangsrohre 24 zum Teilen der Eingangspassage 241 in eine obere Eingangskammer 2411 und eine untere Eingangskammer 2412 angebracht ist, wobei jedes der separierenden Teile 25 ein Eingangsloch 251 umfasst, das in Verbindung mit den oberen und unteren Eingangskammern 2411,2412 steht; und
ein Ausgangselement 30, das an der oberen Oberfläche der Eingangsplatte 21 befestigt ist und ein Einsteckloch 31 zum Einstecken des Verlängerungsrohrs 23 und eine Vielzahl an Ausgangsvorsprüngen 32 beinhaltet, um die oberen Eingangskammern 2411 abzudichten, und wobei jeder der Ausgangsvorsprünge 32 ein Ausgangsloch in Verbindung mit einer entsprechenden der oberen Eingangskammern 2411 beinhaltet.

2. Filteranordnung nach Anspruch 1, bei welcher der Eingangsring 22 an einer inneren Oberfläche des Verbindungsrings 13 befestigt ist.

3. Filteranordnung nach Anspruch 1, bei welcher das Verlängerungsrohr 23 einen Verlängerungsabschnitt 231 umfasst, der von der oberen Oberfläche 211 der Eingangsplatte 21 hervorragt und in das Einsteckloch 31 des Ausgangselements 30 eingesteckt ist.

4. Filteranordnung nach Anspruch 1, bei welcher das Ausgangselement 30 ferner einen Ausgangsring 33 umfasst, der an einer inneren Oberfläche des Eingangsrings 22 des Eingangselements 20 befestigt ist, und bei welchem Luftdichtheit zwischen einer Endoberfläche 331 des Ausgangsrings 33 und der unteren Oberfläche 112 der Verbindungsscheibe 11 aufrechterhalten wird.

5. Filteranordnung nach Anspruch 1, bei welcher jedes der Ausgangslöcher 321 des Ausgangselements 30 und ein entsprechendes des Eingangslöcher 251 des Eingangselements 20 um 180 Grad zueinander versetzt sind.

6. Filteranordnung nach Anspruch 1, bei welcher das Verbindungsrohr 12 des Verbindungselements 10 einer ersten der Filtereinheiten in einem Ausgangsrohr 911 einer Filterabdeckung angebracht ist.

7. Filteranordnung nach Anspruch 1, bei welcher das Verlängerungsrohr 23c des Eingangselements 20 einer letzten Filtereinheit mit einem Stopfen 96 abgedichtet ist.

8. Filteranordnung nach Anspruch 7, bei weicher der Stopfen 96 einen Stopfenbereich 961, der in das Verlängerungsrohr23c gesteckt ist, um einen Abdichteffekt zu erzeugen, einen Abdeckungsbereich 962, der die Eingangsrohre 24c des Eingangselements 20c abdeckt, und eine Aussparung 963 beinhaltet, die in dem Abdeckungsbereich 962 gebildet ist.

9. Filteranordnung nach Anspruch 1, bei welcher ein inneres Rohr 92 auf den Verbindungsring 13 des Verbindungselements 10 einer ersten 100A der Filtereinheiten gesteckt ist.

10. Filteranordnung nach Anspruch 9, bei welcher eine Verbindungsscheibe 11 eines Verbindungselements 10 des ersten 110A der Filtereinheiten einen Durchmesser 113 hat, der größer ist als ein äußerer Durchmesser 921 des inneren Rohres 92.

## Revendications

1. Ensemble filtrant pour un filtre à fluide comprenant:
une pluralité d'unités filtrantes assemblées en série, et chacune des unités filtrantes comprenant:
un élément de raccordement 10 incluant un disque de raccordement 11, un tuyau de raccordement 12 qui fait saillie d'une surface supérieure 111 du disque de raccordement 11 et est pourvu d'un passage de guidage 121 pénétrant à travers le disque de raccordement 11, et un anneau de raccordement 13 qui fait saillie d'une surface inférieure 112 du disque de raccordement,
dans lequel
l'unité filtrante comprend en outre
un élément d'entrée 20 incluant une plaque d'entrée 21, un anneau d'entrée 22 qui fait saillie d'une surface supérieure de la plaque d'entrée 21 et est fixé à l'anneau de raccordement 13, un tuyau de prolongement 23 qui pénètre à travers la plaque d'entrée 21 et est prévu pour l'insertion d'un tuyau de raccordement 12 d'une autre unité filtrante afin de raccorder le tuyau de prolongement 23 et le tuyau de raccordement 12 de l'élément de raccordement 10 d'une autre unité filtrante, une pluralité de tuyaux d'entrée 24 qui font saillie à partir d'une surface inférieure 212 de la plaque d'entrée 21 et sont chacun pourvus d'un passage d'entrée 241 pénétrant à travers la plaque d'entrée 21, et une partie de séparation 25 qui est disposée dans chacun des tuyaux d'entrée 24 pour diviser le passage d'entrée 241 en une chambre d'entrée supérieure 2411 et une chambre d'entrée inférieure 2412, chacune des parties de séparation 25 incluant un orifice d'entrée 251 en communication avec les chambres d'entrée supérieure et inférieure 2411, 2412; et
un élément de sortie 30 fixé à la surface supérieure de la plaque d'entrée 21, et incluant un trou d'insertion 31 pour l'insertion du tuyau de prolongement 23, et une pluralité de saillies de sortie 32 pour sceller les chambres d'entrée supérieures 2411, et chacune des saillies de sortie 32 incluant un orifice de sortie en communication avec une chambre correspondante des chambres d'entrée supérieures 2411.

2. Ensemble filtre selon la revendication 1, dans lequel l'anneau d'entrée 22 est fixé sur une surface interne de l'anneau de raccordement 13.

3. Ensemble filtre selon la revendication 1, dans lequel le tuyau de prolongement 23 inclut une section de prolongement 231 qui fait saillie à partir de la surface supérieure 211 de la plaque d'entrée 21 et est insérée dans l'orifice d'insertion 31 de l'élément de sortie 30.

4. Ensemble filtrant selon la revendication 1, dans lequel l'élément de sortie 30 comprend en outre un anneau de sortie 33 qui est fixé sur une surface interne de l'anneau d'entrée 22 de l'élément d'entrée 20, et une étanchéité à l'air est maintenue entre une surface d'extrémité 331 de l'anneau de sortie 33 et la surface de fond 112 du disque de raccordement 11.

5. Ensemble filtrant selon la revendication 1, dans lequel chacun des orifices de sortie 321 de l'élément de sortie 30 et un orifice correspondant des orifices d'entrée 251 de l'élément d'entrée 20 sont décalés à 180 degrés l'un de l'autre.

6. Ensemble filtrant selon la revendication 1, dans lequel le tuyau de raccordement 12 de l'élément de raccordement 10 d'une première des unités filtrantes est disposé dans un tuyau de sortie 911 d'un couvercle de filtre.

7. Ensemble filtrant selon la revendication 1, dans lequel le tuyau de raccordement 23c de l'élément d'entrée 20 d'une dernière des unités filtrantes scellé avec un obturateur 96.

8. Ensemble filtrant selon la revendication 7, dans lequel l'obturateur 96 comprend une partie d'obturateur 961 qui est insérée dans le tuyau de raccordement 23c pour produire un effet d'étanchéité, une partie de couvercle 962 qui couvre les tuyaux d'entrée 24c de l'élément d'entrée 20c, et un évidement 963 formé dans la partie de couvercle 962.

9. Ensemble filtrant selon la revendication 1, dans lequel un tuyau interne 92 est emmanché sur l'anneau de raccordement 13 de l'élément de raccordement 10 d'une première 100A des unités filtrantes.

10. Ensemble filtrant selon la revendication 9, dans lequel un disque de raccordement 11 d'un élément de raccordement 10 de la première 110A des unités filtrantes a un diamètre 113 plus grand qu'un diamètre externe 921 du tuyau interne 92.
